(19) Europäisches Patentamt / European Patent Office / Office européen des brevets

(11) **EP 2 211 211 B1**

(12) **EUROPEAN PATENT SPECIFICATION**

(45) Date of publication and mention
of the grant of the patent:
**01.10.2014 Bulletin 2014/40**

(51) Int Cl.:
**G02B 6/02** *(2006.01)*     **G02B 6/036** *(2006.01)*

(21) Application number: **10075020.7**

(22) Date of filing: **13.01.2010**

(54) **Single mode optical fibre**

Einmoden-Glasfaser

Fibre optique monomode

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **27.01.2009  FR 0900343**
**27.01.2009  US 147590 P**

(43) Date of publication of application:
**28.07.2010  Bulletin 2010/30**

(73) Proprietor: **Draka Comteq B.V.**
**1083 HJ  Amsterdam (NL)**

(72) Inventors:
• **Sillard, Pierre**
**78150 Le Chesnay (FR)**
• **Molin, Denis**
**91210 Draveil (FR)**
• **De Montmorillon, Louis-Anne**
**78000 Versailles (FR)**
• **Bigot-Astruc, Marianne**
**91460 Marcoussis (FR)**
• **Richard, Simon**
**91140 Villebon sur Yvette (FR)**

(74) Representative: **Algemeen Octrooi- en Merkenbureau B.V.**
**P.O. Box 645**
**5600 AP Eindhoven (NL)**

(56) References cited:
**EP-A- 1 076 250     EP-A- 1 255 138**

• **ITU: "UIT-T G.652 SÉRIE G: SYSTÈMES ET SUPPORTS DE TRANSMISSION, SYSTÈMES ET RÉSEAUX NUMÉRIQUES Caractéristiques des supports de transmission Câbles à fibres optiques Caractéristiques des câbles et fibres optiques monomodes" INTERNET CITATION, 1 June 2005 (2005-06-01), page Complete, XP007909783**

**Description**

The present invention relates to the field of optical fibre transmissions, and more specifically, a line fibre having an enlarged effective area.

For optical fibres, the index profile is generally classified according to the appearance of the graph of the function which associates the refractive index with the radius of the fibre. In standard fashion, the distance r to the centre of the fibre is shown on the x-axis. On the y-axis the difference between the refractive index (at radius r) and the refractive index of the fibre cladding is shown. Thus the terms "step", "trapezium", "alpha" or "triangle" index profile are used to describe graphs having curves with the shapes of a step, trapezium, alpha or triangle. These curves are generally representative of the theoretical or set profile of the fibre, whilst the manufacturing constraints of the fibre may result in a slightly different profile.

In standard fashion, an optical fibre is composed of an optical core the function of which is to transmit and optionally, amplify an optical signal, and an optical cladding the function of which is to confine the optical signal within the core. To this end, the refractive indices of the core $n_c$ and the cladding ng are such that $n_c > n_g$. As is well known, the propagation of an optical signal in a single-mode optical fibre can be broken down into a fundamental mode which is guided in the core, and into secondary modes which are guided over a certain distance in the core-cladding assembly, called cladding modes.

In standard fashion, step-index fibres, also called SMF ("Single Mode Fibres") are used as line fibres for optical fibre transmission systems. These fibres have a chromatic dispersion and a chromatic dispersion slope complying with specific telecommunications standards as well as standardized cut-off wavelength and effective area values.

In response to the need for compatibility between optical systems from different manufacturers, the International Telecommunication Union (ITU) has defined a standard, reference ITU-T G.652, with which a standard optical transmission fibre, called SSMF (Standard Single Mode Fibre), must comply.

Among others, the G.652 standard recommends for a transmission fibre the range of 8.6-9.5 $\mu$m [8.6; 9.5 $\mu$m] for the Mode Field Diameter (MFD) at a wavelength of 1310 nm; a maximum of 1260 nm for the value of the cable cut-off wavelength; the range of 1300-1324 nm [1300; 1324 nm] for the value of the zero dispersion wavelength (denoted $\lambda_0$); a maximum of 0.092 ps/nm$^2$-km for the value of the chromatic dispersion slope. In standard fashion, the cable cut-off wavelength is measured as the wavelength at which the optical signal is no longer single mode after propagation over twenty-two metres of fibre, as defined by subcommittee 86A of the International Electrotechnical Commission in the IEC 60793-1-44 standard.

In a manner known *per se,* an increase in the effective area of a transmission fibre contributes to a reduction in the nonlinear effects in the fibre. A transmission fibre having an enlarged effective area allows a transmission over a longer distance and/or an increase in the operating margins of the transmission system. Typically, an SSMF has an effective area $A_{eff}$ of the order of 80 $\mu$m$^2$.

In order to increase the effective area of a transmission fibre, it was proposed to produce fibre profiles having an enlarged and flattened core compared with an SSMF. However, such an alteration in the shape of the fibre's core leads to an increase in the microbending losses and to an increase in the effective and cable cut-off wavelengths over the fibre. In standard fashion, the effective cut-off wavelength is measured as the wavelength from which the optical signal is single mode after propagation over two metres of fibre, as defined by subcommittee 86A of the IEC in the IEC 60793-1-44 standard.

US-A-6 658 190 describes transmission fibres with an enlarged effective area greater than 110 $\mu$m$^2$. This fibre has a very broad core - 1.5 to 2 times that of an SSMF - and a configuration with a constant or shallowly depressed cladding. In order to compensate for the increase in microbending losses caused by an increase in the effective area, this document proposes increasing the diameter of the fibre (Figure 29). Such an increase in the diameter of the fibre, however, involves in increase in the cost and leads to cabling problems because of incompatibility with the other fibres. In addition, this document points out that the cut-off wavelength decreases with the length of the fibre under consideration (Figure 5) and in particular that the fibre achieves a single-mode character after 1 km of transmission. Such a measurement of the cut-off wavelength, however, does not comply with the standardized measurements cited above. The fibres described in this document have cable cut-off wavelengths greater than 1260 nm and zero chromatic dispersion wavelengths $\lambda_0$ less than 1300 nm. The fibres of this document therefore do not comply with the recommendations of the G.652 standard.

US-A-6 614 976 describes a transmission fibre having a high chromatic dispersion at the wavelength 1550 nm in order to compensate for the negative chromatic dispersion of a NZ-DSF fibre (Non Zero - Dispersion Shifted Fibre). The fibre of this document has an effective area greater than or equal to 90 $\mu$m$^2$. However, the desired high dispersion results in a cable cut-off wavelength greater than 1260 nm and a chromatic zero dispersion wavelength $\lambda_0$ of less than 1300 nm. These features mean that this fibre does not comply with the recommendations of the standard G.652.

US-B-7 187 833 describes a transmission fibre having an effective area greater than 80 $\mu$m$^2$. The fibre of this document has a central core, an intermediate cladding and a depressed cladding. Such a profile can result in the appearance of leaky modes in the fibre which make it difficult to control the cut-off wavelength.

None of the documents of the prior art identified describe an optical fibre having an enlarged effective area compared with an SSMF, while remaining fully compatible with the G.652 standard.

There is therefore a need for a transmission fibre having an enlarged effective area, exceeding 90 $\mu m^2$, without departing from the recommendations of the G.652 standard.

To this end, the invention proposes a fibre profile comprising a central core, an intermediate cladding and a ring; the central core, intermediate cladding and ring being optimized simultaneously to enlarge the effective area of the fibre without adversely affecting the other transmission parameters imposed by the G.652 standard.

More particularly, the invention proposes a single-mode optical fibre according to claim 1.

According to the embodiments, the fibre of the invention can also comprise one or more of the following characteristics:

- the fibre optionally has a depressed cladding outside the ring;
- the depressed cladding has a radius comprised between 14 $\mu m$ and 17 $\mu m$ and an index difference comprised between -10$\times 10^{-3}$ and -1$\times 10^{-3}$;
- the fibre has a standardized ratio between the effective area and the mode field diameter greater than or equal to 1.270;
- the fibre has an effective area strictly greater than 90 $\mu m^2$.
- the fibre has an effective area less than 100 $\mu m^2$;
- for a wavelength of 1625 nm the fibre has bending losses less than or equal to 0.05 dB/100m$_{turns}$ for a radius of curvature of 30 mm.
- for a wavelength of 1550 nm the fibre has microbending losses such that the ratio of the microbending losses of the fibre to the microbending losses of a standard single-mode fibre subjected to identical constraints is less than or equal to 1.5.

Other characteristics and advantages of the invention will become apparent on reading the description which follows of embodiments of the invention, given by way of example and with reference to the attached figures which show:

- Figure 1, a diagrammatic representation of the set profile of a fibre according to a first embodiment of the invention;
- Figure 2, a diagrammatic representation of the set profile of a fibre according to a second embodiment of the invention;

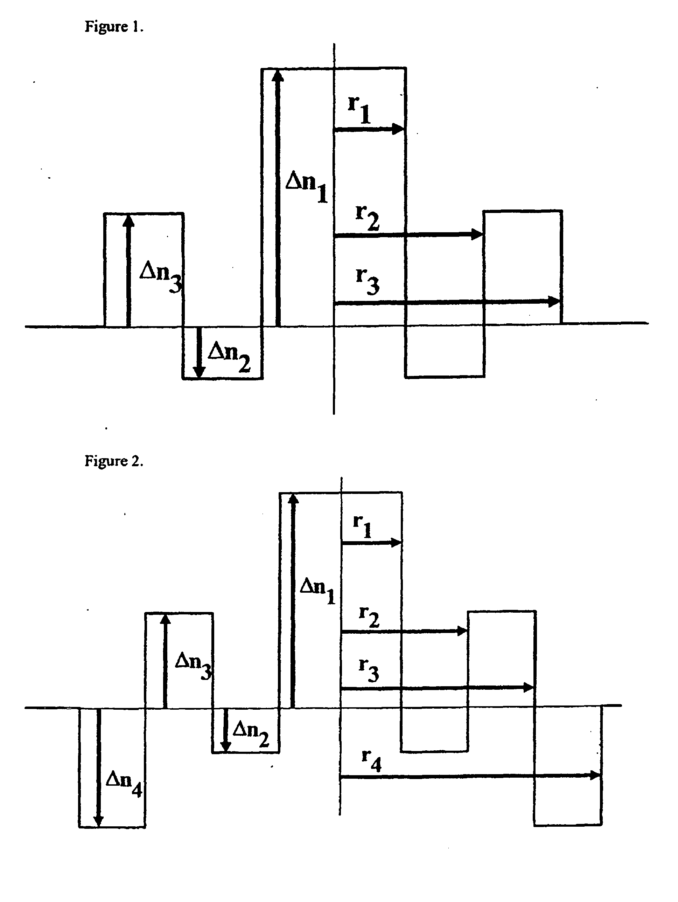

The fibre of the invention will be described with reference to Figures 1 and 2 which represent set profiles, i.e. representative of the theoretical profile of the fibre, the fibre actually obtained after fibre drawing of a preform being able to have a slightly different profile.

According to a first embodiment (Figure 1), the transmission fibre according to the invention comprises a central core having an index difference $\Delta n_1$ with an outer cladding (serving as the optical cladding); an intermediate inner cladding having an index difference $\Delta n_2$ with the outer cladding; and a ring having a positive index difference $\Delta n_3$ with the outer cladding. The refractive indices in the central core, in the intermediate cladding and in the depressed cladding are substantially constant throughout their widths. The width of the core is defined by its radius $r_1$; the width of the intermediate cladding is defined by $r_2$-$r_1$ ($r_2$ minus $r_1$); the width of the ring is defined by $r_3$-$r_2$ ($r_3$ minus $r_2$). The intermediate cladding ($r_2$, $\Delta n_2$) directly surrounds the central core ($r_1$, $\Delta n_1$) and the ring ($r_3$, $\Delta n_3$) directly surrounds the intermediate cladding ($r_2$, $\Delta n_2$). Typically, the central core, the intermediate cladding and the ring are obtained by CVD type deposition in a silica tube and the outer cladding is constituted by refilling the tube generally using natural or doped silica, but can also be obtained by any other deposition technique (VAD or OVD).

According to a second embodiment (Figure 2) as recited in claim 6 the transmission fibre according to the invention also comprises a depressed cladding directly outside the ring ($r_3$, $\Delta n_3$) having a negative index difference $\Delta n_4$ with the outer cladding and has an outer radius $r_4$. The width of the depressed cladding is defined by $r_4$-$r_3$ ($r_4$ minus $r_3$).

In the fibre according to the invention, the central core has a radius $r_1$ comprised between 4.5 $\mu m$ and 6 $\mu m$, and an index difference $\Delta n_1$ comprised between 4.2$\times 10^{-3}$ and 5.2$\times 10^{-3}$ compared with the outer optical cladding (made of silica for example). The core of the fibre according to the invention is therefore slightly larger and more flattened than in an SSMF. These characteristics make it possible to increase the value of the effective area beyond 90 $\mu m^2$ for a wavelength of 1550 nm. The intermediate cladding of the fibre according to the invention has a width $r_2$ comprised between 6.5 $\mu m$ and 9.5 $\mu m$. This cladding also has an index difference $\Delta n_2$ with the outer cladding comprised between -3$\times 10^{-3}$ and 1.0$\times 10^{-3}$. The fibre according to the invention also comprises a ring of radius $r_3$ comprised between 9.5 $\mu m$ and 12.5 $\mu m$. This ring has an index difference $\Delta n_3$ with the outer cladding comprised between 1.0$\times 10^{-3}$ and 5.0$\times 10^{-3}$. The dimensions of the ring, optimized with those of the core and the intermediate cladding, make it possible to control the optical characteristics of the fibre and in particular to retain a mode field diameter value for a wavelength of 1310 nm comprised between 8.6 $\mu m$ and 9.5 $\mu m$, while ensuring an effective area greater than 90 $\mu m^2$ at 1550nm,

and retaining the dispersion and cut-off characteristics within the intervals imposed by the G652 standard.

The fibre according to the invention can moreover have a depressed cladding with a radius $r_4$ comprised between 14 $\mu$m and 17 $\mu$m, and an index difference $\Delta n_4$ comprised between $-10\times10^{-3}$ and $-1\times10^{-3}$. The presence of a depressed cladding makes it possible to confine the signal to a greater extent within the core of the fibre. An outer radius $r_4$ limited to 17 $\mu$m is chosen in order to limit the cost of production of the fibre.

Table I below gives six examples of possible index profiles for a transmission fibre according to the invention in comparison with a standard SSMF fibre having a "step" index profile. The first column gives a reference to each profile. The following columns give the radius values of each section ($r_1$ to $r_4$), and the next columns show the values of the refractive index differences of each section with the outer cladding ($\Delta n_1$ to $\Delta n_4$). The refractive index values are measured at the wavelength of 633 nm. The fibres of the examples from Table I have an outer diameter of 125 $\mu$m. The values in Table I correspond to set profiles of fibres.

TABLE I

| Example | $r_1$ ($\mu$m) | $r_2$ ($\mu$m) | $r_3$ ($\mu$m) | $r_4$ ($\mu$m) | $\Delta n_1$ (@633 nmx$10^{-3}$) | $\Delta n_2$ (@633 nmx$10^{-3}$) | $\Delta n_3$ (@633 nmx$10^{-3}$) | $\Delta n_4$ (@633 nmx$10^{-3}$) |
|---|---|---|---|---|---|---|---|---|
| SSMF | 4.35 | | | | 5.2 | | | |
| 1 | 4.80 | 7.59 | 9.86 | | 5.0 | -0.6 | 2.0 | |
| 2 | 4.73 | 7.90 | 9.79 | | 5.0 | -0.4 | 2.3 | |
| 3 | 5.10 | 7.00 | 9.67 | | 4.9 | -2.5 | 2.2 | |
| 4 | 5.00 | 8.47 | 11.16 | 15.68 | 4.7 | -1.7 | 4.0 | -3.0 |
| 5 | 4.85 | 8.82 | 12.00 | 15.58 | 4.8 | -1.0 | 3.0 | -3.4 |
| 6 | 4.97 | 8.19 | 11.82 | 15.49 | 4.7 | -1.4 | 2.6 | -3.0 |
| 7 | 4.51 | 9.52 | 11.00 | | 5.1 | 0.2 | 2.4 | |

Table II below shows optical characteristics simulated for the transmission fibres corresponding to the index profiles of Table I. In Table II, the first column repeats the references of Table I. The following columns provide, for each fibre profile, the values of cable cut-off wavelength ($\lambda_{cc}$), mode field diameter ($2W0_2$) for the wavelength of 1310 nm, effective area ($A_{eff}$) at the wavelength of 1550 nm, the normalized relationship between the effective area at 1550 nm and the mode field diameter at 1310 nm, chromatic dispersion (D) at the wavelength of 1550 nm, and slope (P) of the chromatic dispersion at the wavelength of 1550 nm. The following columns provide, for each fibre profile, the values of the zero chromatic dispersion wavelength (ZDW), chromatic dispersion slope ($P_{ZDW}$) at this wavelength, and bending losses (PC) at the wavelength of 1625 nm for a radius of curvature of 30 nm.

TABLE II

| Example | $\lambda_{CC}$ (nm) | $2W_{02}$ @ 1310nm ($\mu$m) | $A_{eff}$ @ 1550nm ($\mu$m$^2$) | $A_{eff}[1550nm]/\pi(W_{02}[1310nm])^2$ | D @ 1550 nm (ps/nm-km) | P @ 1550 nm (ps/nm$^2$-km) | ZDW (nm) | $P_{ZDW}$ @ ZDW (ps/nm$^2$-km) | PC R=30 nm @1625 nm (dB/100$_{turns}$) |
|---|---|---|---|---|---|---|---|---|---|
| SSMF | 1240 | 9.2 | 82 | 1.21 | 16.8 | 0.058 | 1315 | 0.086 | <0.05 |
| 1 | <1260 | 9.5 | 92 | 1.28 | 16.2 | 0.058 | 1315 | 0.085 | <0.05 |
| 2 | <1260 | 9.5 | 91 | 1.27 | 16.2 | 0.058 | 1315 | 0.084 | <0.05 |
| 3 | <1260 | 9.5 | 93 | 1.29 | 16.0 | 0.057 | 1310 | 0.084 | <0.05 |
| 4 | <1260 | 9.5 | 92 | 1.30 | 16.1 | 0.057 | 1310 | 0.083 | <0.05 |
| 5 | <1260 | 9.5 | 91 | 1.29 | 16.1 | 0.057 | 1310 | 0.083 | <0.05 |
| 6 | <1260 | 9.5 | 92 | 1.29 | 16.1 | 0.057 | 1310 | 0.083 | <0.05 |
| 7 | <1260 | 9.5 | 91 | 1.27 | 16.0 | 0.058 | 1315 | 0.085 | <0.05 |

For the six examples according to the invention, it is noted from Table II that the normalized ratio between the effective area $A_{eff}$ and the mode field diameter $2W_{02}$ (see formula I) is greater than or equal to 1.270.

$$Formula\ 1 \qquad ratio = \frac{A_{ff}[1550nm]}{\pi(W_{02}[1310nm])^2}$$

This makes it possible to obtain an effective area greater than 90 $\mu m^2$ while retaining a mode field diameter comprised between 8.6 $\mu m$ and 9.5 $\mu m$. It is noted from Table II that Examples 1 to 7 comply with the G.652 standard. The cable cut-off wavelength $\lambda_{cc}$ is less than 1260 nm; the zero chromatic dispersion wavelength ZDW is comprised between 1300 nm and 1324 nm, and the chromatic dispersion slope is less than 0.092 ps/nm$^2$-km. On the other hand, bending losses are noted as less than or equal to 0.05 dB/100$_{tums}$. These bending loss values are equivalent to those of a standard step-index profile G.652 fibre. Therefore the transmission fibre according to the invention has a high effective area while complying with the recommendations of the G.652 standard.

Moreover, the fibre according to the invention has microbending losses such that the ratio of the microbending losses of a fibre according to the invention to the microbending losses in an SSMF subjected to identical constraints is less than or equal to 1.5. The microbending losses can be measured, for example, by a method termed the fixed diameter drum method. This method is described in the technical recommendation of the IEC subcommittee 86A under the reference IEC TR-62221.

The fibre according to the invention has an effective area value that is increased compared to an SSMF. The effective area however remains less than 100 $\mu m^2$. This limit ensures compliance with the set of criteria of the G.652 standard.

The profile of the fibre according to the invention is optimized to comply with these constraints of a high effective area and optical parameters in compliance with the G.652 standard. Tables I and II illustrate the radius and index limit values mentioned above in order to ensure a high effective area and compliance with the constraints of the G.652 standard. In particular, if the radius of the core $r_1$ falls below 4.5 $\mu m$ and if $\Delta n_1$ rises above 5.5, the effective area will be less than 90 $\mu m^2$. If $r_1$ rises above 6 $\mu m$, then the mode field diameter $2W_{02}$, the cable cut-off wavelength $\lambda_{cc}$ and the zero chromatic dispersion wavelength ZDW have values outside the G.652 standard. Similarly if $r_2$ is too small, the mode field diameter $2W_{02}$ will be greater than the maximum value 9.5 $\mu m$ imposed by the G.652 standard; and if $r_2$ becomes too large, the effective area will be less than 90 $\mu m^2$. Moreover, if $r_3$ becomes too small, the effective area will be less than 90 $\mu m^2$; and if $r_3$ becomes too large, the mode field diameter $2W_{02}$ becomes greater than the maximum value 9.5 $\mu m$ imposed by the G.652 standard, as well as the value of the cable cut-off wavelength $\lambda_{cc}$.

The transmission fibre according to the invention is particularly suited to C-band long-distance transmission systems. The increase in the effective area, without significant degradation of the other optical parameters of the fibre, allows an increase in the power of the optical signals transmitted without increasing the nonlinear effects; the signal-to-noise ratio of the transmission line is thus improved, which is particularly sought after in land-based or underwater long-distance optical transmission systems.

Moreover, the fibre according to the invention complies with the recommendation of standard ITU G.652. The fibre according to the invention can thus be installed in a number of transmission systems with good compatibility with the other fibres of the system.

## Claims

1. A single-mode optical fibre comprising:

   - a central core having a radius $r_1$ comprised between 4.5 $\mu m$ and 6 $\mu m$ and a positive index difference $\Delta n_1$ comprised between $4.2 \times 10^{-3}$ and $5.2 \times 10^{-3}$ with an outer optical cladding;
   - an intermediate cladding having a radius $r_2$ comprised between 6.5 $\mu m$ and 9.5 $\mu m$ and an index difference $\Delta n_2$ with the outer optical cladding comprised between $-3.0 \times 10^{-3}$ and $1.0 \times 10^{-3}$;
   - a ring having a radius $r_3$ comprised between 9.5 $\mu m$ and 12.5 $\mu m$ and a positive index difference $\Delta n_3$ with the outer optical cladding comprised between $1 \times 10^{-3}$ and $5.0 \times 10^{-3}$;
   the optical fibre having an effective area at a wavelength of 1550 nm greater than or equal to 90 $\mu m^2$, with
   - a cable cut-off wavelength $\lambda_{cc}$ of less than 1260 nm;
   - a mode field diameter MDF at the wavelength of 1310 nm comprised between 8.6 $\mu m$ and 9.5 $\mu m$;
   - a zero chromatic dispersion wavelength Xo comprised between 1300 nm and 1324 nm;
   - a chromatic dispersion slope less than 0.092 ps/nm$^2$-km at the zero chromatic dispersion wavelength Xo.

**2.** A single-mode optical fibre comprising:

- a central core having a radius $r_1$ comprised between 4.5 $\mu$m and 6 $\mu$m and a positive index difference $\Delta n_1$ comprised between $4.2 \times 10^{-3}$ and $5.2 \times 10^{-3}$ with an outer optical cladding;
- an intermediate cladding having a radius $r_2$ comprised between 6.5 $\mu$m and 9.5 $\mu$m and an index difference $\Delta n_2$ with the outer optical cladding comprised between $-3.0 \times 10^{-3}$ and $1.0 \times 10^{-3}$;
- a ring having a radius $r_3$ comprised between 9.5 $\mu$m and 12.5 $\mu$m and a positive index difference $\Delta n_3$ with the outer optical cladding comprised between $1 \times 10^{-3}$ and $5.0 \times 10^{-}$;
- a depressed cladding having a radius $r_4$ and a negative index difference $\Delta n_4$ with the outer optical cladding; the optical fibre having an effective area at a wavelength of 1550 nm greater than or equal to 90 $\mu$m$^2$, with
- a cable cut-off wavelength $\lambda_{cc}$ of less than 1260 nm;
- a mode field diameter MDF at the wavelength of 1310 nm comprised between 8.6 $\mu$m and 9.5 $\mu$m;
- a zero chromatic dispersion wavelength Xo comprised between 1300 nm and 1324 nm;
- a chromatic dispersion slope less than 0.092 ps/nm$^2$-km at the zero chromatic dispersion wavelength Xo.

**3.** The optical fibre according to claim 2, in which the depressed cladding has a radius $r_4$ comprised between 14 $\mu$m and 17 $\mu$m.

**4.** The optical fibre according to any one of claims 2 to 3 , in which the depressed cladding has an index difference $\Delta n_4$ with the outer optical cladding comprised between $10 \times 10^{-3}$ and $-1 \times 10^{-3}$.

**5.** The optical fibre according to any one of the preceding claims, **characterized in that** it has a normalized ratio of the effective area to the mode field diameter MFD greater than or equal to 1.270.

**6.** The optical fibre according to any one of the preceding claims, **characterized in that** it has an effective area less than 100 $\mu$m$^2$.

**7.** The optical fibre according to any one of the preceding claims, **characterized in that** it has, for a wavelength of 1625 nm, bending losses less than or equal to 0.05 dB/100$_{turns}$ for a radius of curvature of 30 mm.

**8.** The optical fibre according to any one of the preceding claims, **characterized in that** it has, for a wavelength of 1550 nm, microbending losses such that the ratio of the microbending losses of the fibre to that of a standard single-mode fibre SSMF subjected to identical constraints is less than or equal to 1.5.

**Patentansprüche**

**1.** Einmoden-Lichtleitfaser mit:

- einem zentralen Kern, der einen Radius $r_1$, der zwischen 4,5 $\mu$m und 6 $\mu$m liegt, und einen positiven Index-unterschied $\Delta n_1$, der zwischen $4,2 \times 10^{-3}$ und $5,2 \times 10^{-3}$ liegt, zu einem äußeren optischen Mantel aufweist,
- einem Zwischenmantel, der einen Radius $r_2$, der zwischen 6,5 $\mu$m und 9,5 $\mu$m liegt, und einen Indexunterschied $\Delta n_2$ zu dem äußeren optischen Mantel aufweist, der zwischen $-3,0 \times 10^{-3}$ und $10 \times 10^{-3}$ liegt,
- einem Ring, der einen Radius $r_3$, der zwischen 9,5 $\mu$m und 12,5 $\mu$m liegt, und einen positiven Indexunterschied $\Delta n_3$ zu dem äußeren optischen Mantel aufweist, der zwischen $1 \times 10^{-3}$ und $5,0 \times 10^{-3}$ liegt,
- wobei die Lichtleitfaser bei einer Wellenlänge von 1550 nm eine Wirkfläche von größer oder gleich 90 $\mu$m$^2$ hat, mit
- einer Kabel-Grenzwellenlänge $\lambda_{cc}$ von kleiner als 1260 nm,
- einem Modenfelddurchmesser (auf Englisch: mode-field diameter, MFD) bei der Wellenlänge von 1310 nm, der zwischen 8,6 $\mu$m und 9,5 $\mu$m liegt,
- einer chromatischen Nulldispersionswellenlänge Xo, die zwischen 1300 nm und 1324 nm liegt,
- einer Steigung der chromatischen Dispersion, die bei der chromatischen Nulldispersionswellenlänge Xo kleiner als 0,092 ps/nm$^2$-km ist.

**2.** Einmoden-Lichtleitfaser mit:

- einem zentralen Kern, der einen Radius $r_1$, der zwischen 4,5 $\mu$m und 6 $\mu$m liegt, und einen positiven Index-unterschied $\Delta n_1$, der zwischen $4,2 \times 10^{-3}$ und $5,2 \times 10^{-3}$ liegt, zu einem äußeren optischen Mantel aufweist,
- einem Zwischenmantel, der einen Radius $r_2$, der zwischen 6,5 $\mu$m und 9,5 $\mu$m liegt, und einen Indexunterschied

$\Delta n_2$ zu dem äußeren optischen Mantel aufweist, der zwischen -3,0×10⁻³ und 1,0×10⁻³ liegt,
- einem Ring, der einen Radius $r_3$, der zwischen 9,5 μm und 12,5 μm liegt, und einen positiven Indexunterschied $\Delta n_3$ zu dem äußeren optischen Mantel aufweist, der zwischen 1×10⁻³ und 5,0×10⁻³ liegt,
- einem abgesenkten Mantel, der einen Radius $r_4$ und einen negativen Indexunterschied $\Delta n_4$ zu dem äußeren optischen Mantel aufweist,
wobei die Lichtleitfaser bei einer Wellenlänge von 1550 nm eine Wirkfläche von größer oder gleich 90 μm² hat, mit
- einer Kabel-Grenzwellenlänge $\lambda_{cc}$ von kleiner als 1260 nm,
- einem Modenfelddurchmesser (auf Englisch: mode-field diameter, MFD) bei der Wellenlänge von 1310 nm, der zwischen 8,6 μm und 9,5 μm liegt,
- einer chromatischen Nulldispersionswellenlänge Xo, die zwischen 1300 nm und 1324 nm liegt,
- einer Steigung der chromatischen Dispersion, die bei der chromatischen Nulldispersionswellenlänge Xo kleiner als 0,092 ps/nm²-km ist.

**3.** Lichtleitfaser nach Anspruch 2, bei der der abgesenkte Mantel einen Radius $r_4$ aufweist, der zwischen 14 μm und 17 μm liegt.

**4.** Lichtleitfaser nach einem der Ansprüche 2 bis 3, bei der der abgesenkte Mantel einen Indexunterschied $\Delta n_4$ zu dem äußeren optischen Mantel aufweist, der zwischen -10×10⁻³ und -1×10⁻³ liegt.

**5.** Lichtleitfaser nach einem der vorhergehenden Ansprüche, **dadurch gekennzeichnet, dass** sie ein normiertes Verhältnis der Wirkfläche zu dem Modenfelddurchmesser (auf Englisch: mode-field diameter, MFD) von größer oder gleich 1,270 aufweist.

**6.** Lichtleitfaser nach einem der vorhergehenden Ansprüche, **dadurch gekennzeichnet, dass** sie eine Wirkfläche von kleiner als 100 μm² aufweist.

**7.** Lichtleitfaser nach einem der vorhergehenden Ansprüche, **dadurch gekennzeichnet, dass** sie für eine Wellenlänge von 1625 nm Krümmungsverluste von kleiner oder gleich 0,05 dB/100_Windungen bei einem Krümmungsradius von 30 mm hat.

**8.** Lichtleitfaser nach einem der vorhergehenden Ansprüche, **dadurch gekennzeichnet, dass** sie für eine Wellenlänge von 1550 nm Mikrokrümmungsverluste derart hat, dass das Verhältnis der Mikrokrümmungsverluste der Faser zu denen einer identischen Bedingungen ausgesetzten Standard-Einmodenfaser SSMF (standard single-mode fibre) kleiner oder gleich 1,5 ist.

**Revendications**

**1.** Fibre optique monomode comprenant :

- un coeur central présentant un rayon ($r_1$) compris entre 4,5 μm et 6 μm et une différence d'indice positive ($\Delta n_1$) comprise entre 4,2×10⁻³ et 5,2×10⁻³ avec une gaine optique extérieure ;
- une gaine intermédiaire présentant un rayon ($r_2$) compris entre 6,5 μm et 9,5 μm et une différence d'indice ($\Delta n_2$) avec la gaine optique extérieure comprise entre -3,0x10⁻⁴ et 1,0x10⁻³ ;
- un anneau présentant un rayon ($r_3$) compris entre 9,5 μm et 12,5 μm et une différence d'indice positive ($\Delta n_3$) avec la gaine optique extérieure comprise entre 1x10⁻³ et 5,0x10⁻³ ;
la fibre optique présentant une surface effective à une longueur d'onde de 1 550 nm supérieure ou égale à 90 μm², avec
- une longueur d'onde de coupure en câble ($\lambda_{cc}$) inférieure à 1 260 nm ;
- un diamètre de champ de mode (MFD en anglais) à la longueur d'onde de 1 310 nm compris entre 8,6 μm et 9,5 μm ;
- une longueur d'onde de l'annulation de la dispersion chromatique (Xo) comprise entre 1 300 nm et 1 324 nm ;
- une pente de dispersion chromatique inférieure à 0,092 ps/nm²-km à la longueur d'onde d'annulation de la dispersion chromatique (Xo).

**2.** Fibre optique monomode comprenant :

- un coeur central présentant un rayon ($r_1$) compris entre 4,5 μm et 6 μm et une différence d'indice positive

($\Delta n_1$) comprise entre 4,2x10$^{-3}$ et 5,2x10$^{-3}$ avec une gaine optique extérieure ;

- une gaine intermédiaire présentant un rayon ($r_2$) compris entre 6,5 $\mu$m et 9,5 $\mu$m et une différence d'indice ($\Delta n_2$) avec la gaine optique extérieure comprise entre -3,0x10$^{-3}$ et 1,0x10$^{-3}$ ;

- un anneau présentant un rayon ($r_3$) compris entre 9,5 $\mu$m et 12,5 $\mu$m et une différence d'indice positive ($\Delta n_3$) avec la gaine optique extérieure comprise entre 1x10$^{-3}$ et 5,0x10$^{-3}$ ;

- une tranchée enterrée présentant un rayon ($r_4$) et une différence d'indice négative ($\Delta n_4$) avec la gaine optique extérieure ;

la fibre optique présentant une surface effective à une longueur d'onde de 1 550 nm supérieure ou égale à 90 $\mu$m$^2$, avec

- une longueur d'onde de coupure en câble ($\lambda_{cc}$) inférieure à 1 260 nm ;

- un diamètre de champ de mode (MFD en anglais) à la longueur d'onde de 1 310 nm compris entre 8,6 $\mu$m et 9,5 $\mu$m ;

- une longueur d'onde de l'annulation de la dispersion chromatique (Xo) comprise entre 1 300 nm et 1 324 nm ;

- une pente de dispersion chromatique inférieure à 0,092 ps/nm$^2$-km à la longueur d'onde d'annulation de la dispersion chromatique (Xo).

**3.** Fibre optique selon la revendication 2, dans laquelle la tranchée enterrée présente un rayon ($r_4$) compris entre 14 $\mu$m et 17 $\mu$m.

**4.** Fibre optique selon l'une quelconque des revendications 2 et 3, dans laquelle la tranchée enterrée présente une différence d'indice ($\Delta n_4$) avec la gaine optique extérieure comprise entre -10$\times$10$^{-3}$ et - 1$\times$10$^{-3}$.

**5.** Fibre optique selon l'une quelconque des revendications précédentes, **caractérisée en ce qu'**elle présente un rapport normalisé de la surface effective sur le diamètre de champ de mode (MFD en anglais) supérieur ou égal à 1,270.

**6.** Fibre optique selon l'une quelconque des revendications précédentes, **caractérisée en ce qu'**elle présente une surface effective inférieure à 100 $\mu$m$^2$.

**7.** Fibre optique selon l'une quelconque des revendications précédentes, **caractérisée en ce qu'**elle présente, pour une longueur d'onde de 1 625 nm, des pertes en courbures inférieures ou égales à 0,05 dB/100$_{tours}$ pour un rayon de courbure de 30 mm.

**8.** Fibre optique selon l'une quelconque des revendications précédentes, **caractérisée en ce qu'**elle présente, pour une longueur d'onde de 1 550 nm, des pertes en microcourbures telles que le rapport des pertes en microcourbures de la fibre sur des pertes en microcourbures d'une fibre monomode standard (SSMF en anglais) soumise à des contraintes identiques est inférieur ou égal à 1,5.

Figure 1.

$r_1$

$\Delta n_1$

$r_2$

$\Delta n_3$

$r_3$

$\Delta n_2$

Figure 2.

$r_1$

$\Delta n_1$

$r_2$

$\Delta n_3$

$r_3$

$\Delta n_2$

$r_4$

$\Delta n_4$

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6658190 A
- US 6614976 A
- US 7187833 B